# EUROPEAN PATENT SPECIFICATION

(11) **EP 3 068 607 B1**
(45) Date of publication and mention of the grant of the patent: **05.08.2020**
(21) Application number: 14809546.6
(22) Date of filing: 07.11.2014
(51) Int. Cl.: B29C 64/106, B29C 64/227, B29C 64/379, B33Y 30/00

(54) **SYSTEM FOR ROBOTIC 3D PRINTING**
SYSTEM ZUM ROBOTISCHEN 3D-DRUCKEN
SYSTÈME POUR IMPRESSION 3D ROBOTISÉE

(30) Priority: 13.11.2013 US 201361903646 P
(43) Date of publication of application: 21.09.2016
(73) Proprietor: ABB Schweiz AG, 5400 Baden (CH)
(72) Inventor: ZHANG, Biao, West Hartford, CT 06117 (US); BOCA, Remus, Simsbury, CT 06070 (US); NEWKIRK, Jeremy, Brookfield, IL 60513 (US); FUHLBRIGGE, Thomas, A., Ellington, CT 06029 (US); ZHANG, George, Q., Windsor, CT 06095 (US); LI, Xiongzi, West Hartford, CT 06117 (US)
(74) Representative: Gregorj S.r.l.
(86) International application number: PCT/US2014/064585
(87) International publication number: WO 2015/073322

(56) References cited:
- EP-A1- 0 967 067
- WO-A1-2007/083372
- WO-A1-2012/171644
- WO-A2-2009/057107
- US-A1- 2009 177 309

## Description

### 1. Field of the Invention

This invention relates to the use of robots to perform 3D printing.

### 2. Description of the Prior Art

Robots are now used to perform 3D printing.

The international application No. WO2012/171644 A1 (Arburg Gmbh & Co KG) discloses a system for the production of a three-dimension object in accordance with the preamble of claim 1 and the international application No. WO2009/057107A2 (Elyasi Yaron) discloses system and method for producing customized items.

### Summary of the Invention

A system for printing a 3D part on a platform has:
a first robot for holding and moving the platform; and
at least one second robot having attached thereto a 3D printing head positioned and movable by the second robot to print the 3D part on the platform when the first robot moves the platform relative to the printing head.

A system for printing a 3D part on a platform has:
a first robot for holding and moving the platform;
at least one second robot having attached thereto a 3D printing head positioned and movable by the second robot to print the 3D part on the platform when the first robot moves the platform relative to the printing head; and
a computing device connected to the first robot and the at least one second robot for controlling printing of the 3D part on platform, the computing device having therein a 3D CAD model of the 3D part to be printed, the computing device having computer program code therein configured to analyze the 3D CAD model of the 3D part to be printed to plan a process for using the first robot and the at one second robot to print the 3D part. The system in accordance with the invention is defined in claim 1.

### Description of the Drawing

Fig. 1 shows a first embodiment for the robotic 3D printing system.
Fig. 2 shows a second embodiment for the robotic 3D printing system.
Fig. 3 shows a third embodiment for the robotic 3D printing system.
Fig. 4 shows a fourth embodiment for the robotic 3D printing system.
Fig. 5 shows a flowchart for the process to print a 3D part in the embodiments shown in Figs. 1 to 4 with another robot holding the fixed printing head.
Fig. 6 shows a flowchart for the process to print a 3D part in a robotic 3D printing system wherein the printing head can move in the X-Y plane with two or three degrees of freedom (DOF) motion systems.
Fig. 7 shows a flowchart for a process flow that checks the robot movement based on the platform and the position and orientation of the platform relative to the robot that is holding the platform.
Fig. 8 shows a flowchart for a process flow for a platform movement calibration that uses a vision system for high precision 3D part printing.
Fig. 9 shows a flowchart for a process that is used to improve the robot motion (speed, etc.) while the 3D part is being built.
Fig. 10 shows in block diagram form a system that has embedded in it functionality to move robots used in the 3D printing of the part.

### Detailed Description

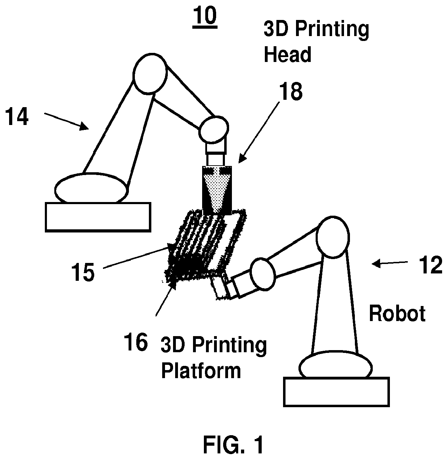

Referring now to Fig. 1, there is shown a first embodiment 10 for the present system. This embodiment has two robots 12 and 14 to accurately deposit material in 3D on the 3D printing platform 16. Robot 12 holds the platform 16 on which the 3D printed part 15 is built and moves platform 16 relative to the 3D printing head 18 that is held by robot 14. 3D printing head 18 deposits the material on the platform 16 to build the printed part 15.

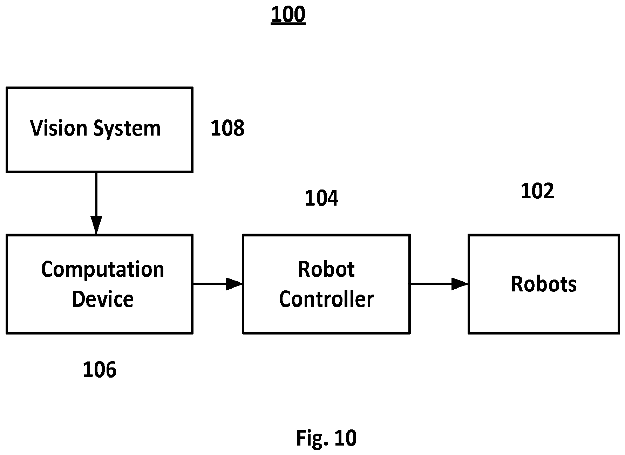

Robot 12 can position the platform 16 within the workspace of the robot 14. In the 3D printing process, robot 12 and robot 14 are controlled by a robot controller such as controller 104 shown in block diagram form in the system 100 of Fig. 10 that has embedded in it functionality to move robots 12 and 14. The robots are represented by block 102. Controller 104 can for example be the IRC5 controller available from ABB and the robot movement functionality can be ABB's MultiMove functionality.

The two robots 12 and 14 can perform coordinated synchronized movements. In these movements, the robot 12 moves the platform 16 and the robot 14 moves the 3D printing head 18 to deposit the material on platform 16 to build the part 15.

The two robots 12 and 14 also can perform independent movements. In these movements, robot 12 positions the platform 16 in a location with a specified position and orientation. When robot 12 is not moving, robot 14 begins to move the 3D printing head 18 and deposits the material on platform 16 to build the part 15.

The two robots 12 and 14 also can perform semi-coordinated movements that switches between the coordinated synchronized movements and the independent movements described above.

The two robot configuration in 3D printing system 10 has advantages over traditional 3D printing systems. System 10 can print larger parts because of the larger range of relative position between the 3D printing head 18 and platform 16; print more complicated parts because of the dexterity of the relative movement between printing head 18 and platform 16; and print more flexible 3D part printing configurations by getting rid of support materials because in the independent movement mode robot 12 can position the platform/3D printing head in a fixed position and robot 14 can move 3D printing head/platform to create relative movement for depositing material on platform 16 to create part 15.

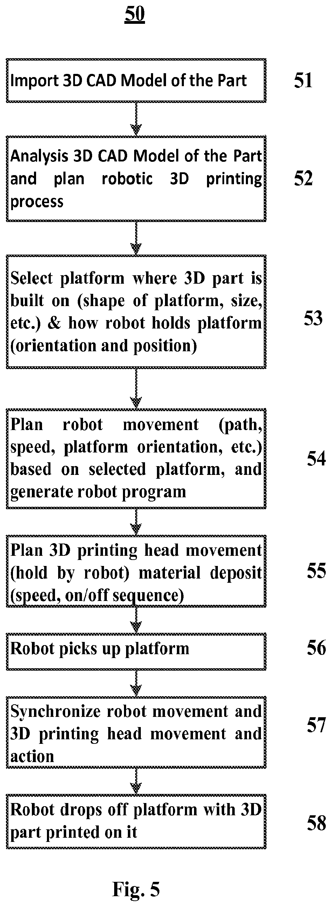

The fixed position of robot 12 to the robot 14 in the independent movement mode is accurately pre-calibrated or located by a sensor system such as a 2D or 3D vision system 108 shown in block diagram form in Fig. 10. Fig. 10 also shows a computation device 106 between vision system 108 and controller 104. While controller 104 is also a computing device it may not be capable of handling the images from vision system 108 and that is why system 100 may need as shown in Fig. 10 a separate computation device 106. The computation device 106 may also be needed to slice the CAD model of the part to be printed and generate as is described below in connection with Fig. 5 the 3D printing paths. Thus the moving robot 14 takes advantage of the high repeatability of the industrial robots ability to accurately deposit material in a small space.

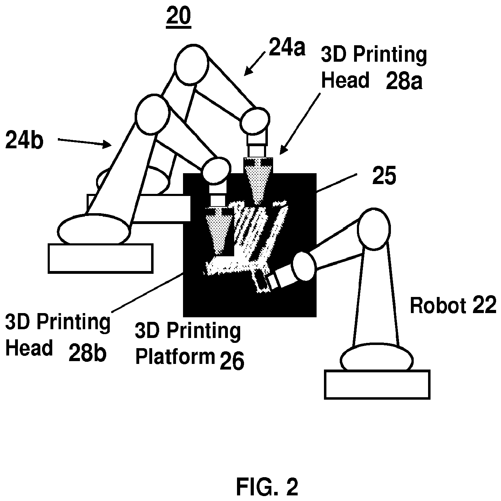

A second embodiment for the 3D printing system can have two or more robots each holding an associated one of two or more 3D printing heads and a single robot holding the 3D printing platform. One example of this second embodiment is shown in Fig. 2 wherein the system 20 has two robots 24a and 24b each holding an associated one of the two 3D printing tool heads 28a and 28b, and a single 6 DOF robot 22 holding the 3D printing platform 26 on which the 3D part 25 is built.

The robot configuration in robotics 3D printing system 20 has advantages over traditional 3D printing systems. System 20 can print larger parts; and print part faster and more efficiently than the traditional system. The two printing heads 28a and 28b shown in Fig. 2 can work on different areas of the part 25, or work on different resolution areas of the part 25, or one of the two heads prints a rough part first and the other of the two heads prints the fine features over the rough part, etc.

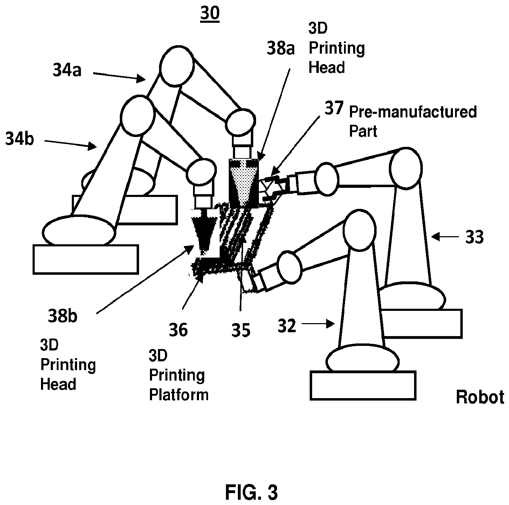

Referring now to Fig. 3, there is shown another embodiment 30 for the present 3D printing system. In this embodiment as in the embodiment 20 shown in Fig. 2, a single 6 DOF robot 32 holds the 3D printing platform 36 and two robots 34a and 34b each hold an associated one of the two 3D printing 3D printing heads 38a and 38b. As with embodiment 20 shown in Fig. 2 only two printing robots 34a and 34b are shown in Fig. 3. Embodiment 30 also has one or more other robots (only one such robot 33 is shown in Fig. 3 for ease of illustration) holding an associated pre-manufactured part 37 for insertion (assembly) into the 3D printed part 35. For example, part 37 can be an electrical element such as a diode or a resistor to be inserted in the 3D printed part 35 when the part 35 is a 3D printed circuit board or a fabricated part such as a bearing or a precisely 3D printed part to be inserted in a 3D printed part 35 that is coarsely printed on platform 36.

It should be appreciated that a robot such as robot 33 that holds a pre-manufactured part for insertion into the 3D printed part 35 can also be used in the embodiment 10 shown in Fig. 1.

The robot configuration in the robotic 3D printing system 30 has advantages over traditional 3D printing systems. In system 30, the 3D printed part 35 and assembly parts 37 form the final assembled part in one process; and a more complicated 3D part 35 is printed in less time because the pre-manufactured part helps form the final part and thus saves printing time.

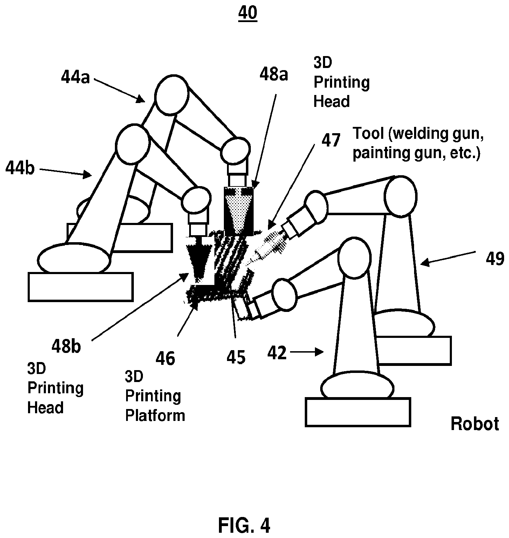

Referring now to Fig. 4, there is shown another embodiment 40 for the present 3D printing system. In this embodiment as in the embodiments shown in Figs. 2 and 3, a single 6 DOF robot 42 holds the 3D printing platform 46 on which 3D part 45 is built and two robots 44a and 44b each hold an associated one of the two printing 3D printing heads 48a and 48b. For ease of illustration only two printing robots 44a and 44b are shown in Fig. 4. This embodiment also has one or more other robots (only one such robot 49 is shown in Fig. 4 for ease of illustration) to hold a tool, such as a painting gun, a welding gun, etc. that is used to perform work on 3D printed part 45. The robot 49 can change the tool it is holding to a different tool.

It should be appreciated that a robot such as robot 49 that holds a tool 47 to perform work on the 3D printed part 45 can also be used in the embodiment 10 shown in Fig. 1.

The robot configuration in the robotics 3D printing system 40 has advantages over traditional 3D printing systems. In system 40 the printing, painting, cleaning etc. of the 3D part 45, etc. all occur in one process

In another configuration (not shown), the 3D printing head can move in the X-Y plane with 2 or 3 DOF motion systems. The robot holding the 3D printing platform can then position the platform relative to the 3D printing head. The 2 DOF motion systems can be used in the embodiments 10, 20, 30 and 40 shown in Figs. 1 to 4 respectively but only for the robot that holds the printing head.

Moreover, the platform can be held by multiple robots for handling of a heavy part.

Also, multiple platforms can be held by multiple robots. The 3D printing heads can deposit material on each platform at same time and then combine the material on platforms to form the final part together. As can be appreciated the use of multiple robots increases the efficiency of the robotic 3D printing.

Referring now to Fig. 5, there is shown a flowchart for the process 50 to print a 3D part on a platform held by a robot in the above described robotic 3D printing systems 10, 20, 30 and 40 with another robot holding the printing head. In step 51, the CAD model of the 3D part to be printed is imported into the robot controller 104 or into the computation device 106.

In step 52, the CAD model of the 3D part to be printed is analyzed and the robotic process to print that 3D part is planned. In step 53, based on the results of the analysis performed and plan created in step 52, there is a selection of the shape, size etc. of the platform on which the 3D part is to be built and how the robot that is to hold the platform is or will be oriented and positioned. As can be appreciated steps 52 and 53 can be run in controller 104 or computation device 106.

In step 54, the movement of the robot holding the selected platform, that is, the path to be followed by the robot, the robot speed, the orientation of the platform and the like are planned based on the selected platform and the program for that robot to accomplish the 3D printing is created. In step 55, there is planned the movement, such as speed and on/off sequence, of the robot held 3D printing head with regard to the amount of material to be deposited on the platform during the printing of the 3D part. As can be appreciated steps 54 and 55 can be run in controller 104 or computation device 106.

In step 56, the robot that is to hold the selected platform picks up that platform. In step 57, the movement of the robot holding the platform and the action of the 3D printing head are synchronized and after they are synchronized the 3D part is printed. In step 58, at the completion of the printing of the 3D part, the robot that is holding the platform with the printed part on it places the platform with that part on it at a predetermined location.

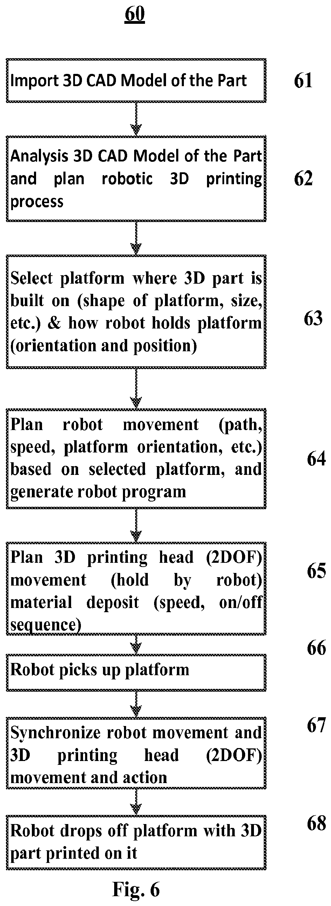

Referring now to Fig. 6, there is shown a flowchart for the process 60 to print a 3D part in a robotic 3D printing system wherein the printing head can move in the X-Y plane with two or three degrees of freedom (DOF). This allows the robot that is holding the platform to position the platform relative to the printing head.

Process 60 has eight steps 61 to 68 that are identical to steps 51 to 58 in the process flow 50 shown in Fig. 5 with two exceptions. The exceptions are in steps 65 and 67. In the 3D printing systems that use process flow 60 there is a 2 DOF printing head whereas in the systems that use process flow 50 the head is held by robot 14. Therefore the material deposit step 65 in flow 60 differs from the material deposit step 55 in process flow 50 and the synchronizing and printing step 67 differs from step 57 because in steps 65 and 67 the printing head can move in the X-Y plane with two or three degrees of freedom.

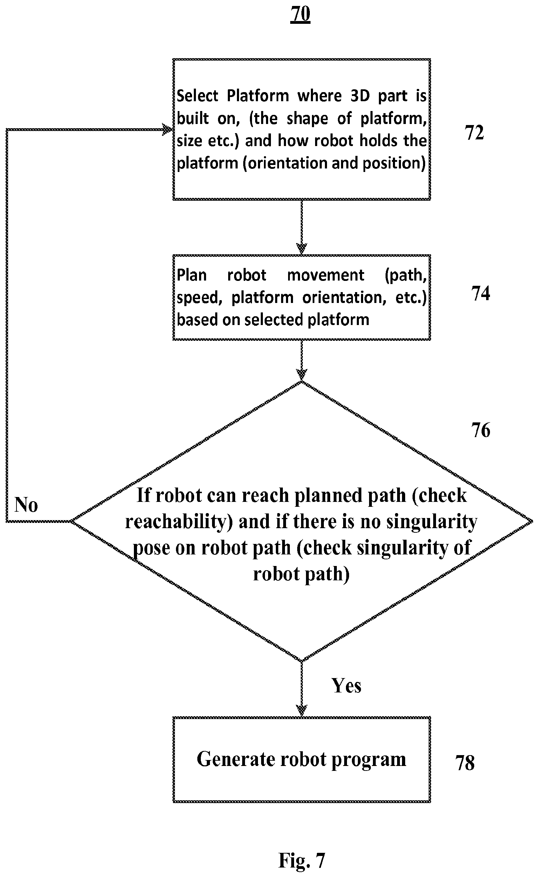

Referring now to Fig. 7, there is shown a flowchart for a four step process flow 70 that checks the robot movement based on the platform and the position and orientation of the selected platform relative to the robot that is holding the platform. Steps 72 and 74 in flow 70 are each identical to steps 53 and 54 in flow 50 and steps 63 and 64 in flow 60 and thus do not have to be further described.

In decision 76, flow 70 determines if the robot that is holding the selected platform can reach the planned path and if there is no singularity pose on the robot path. Flow 70 returns to step 72 to select another platform if the answer in decision 76 is no to either or both of the two determinations. If the answer is yes to both determinations, then the flow proceeds to step 78 where the robot program is generated.

It should be that since steps 72 and 74 are identical to steps 53 and 54 in flow 50 and steps 63 and 64 in flow 60 that steps 76 and 78 can be used in flow 50 after step 54 is performed and in flow 60 after step 64 is performed.

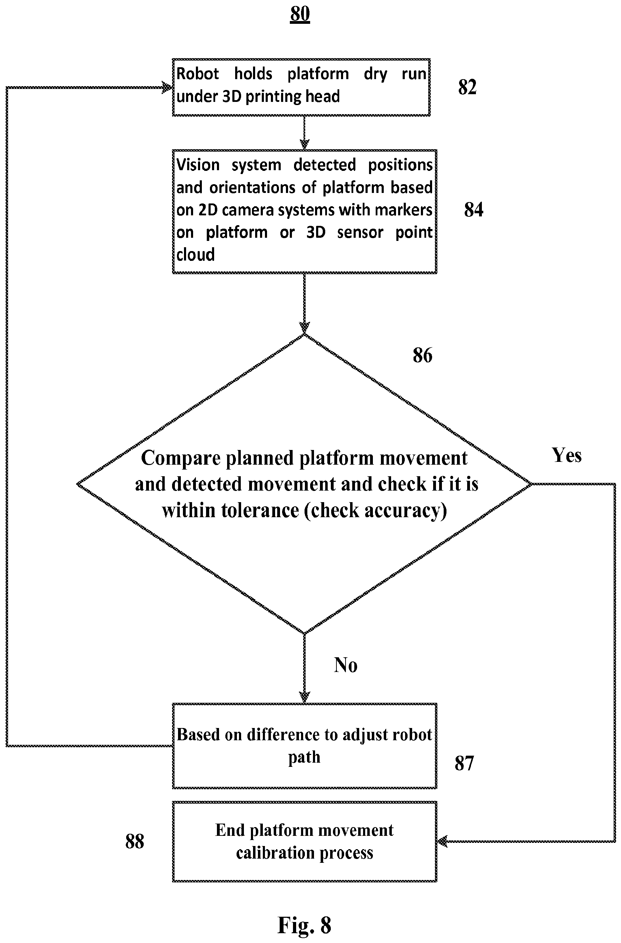

Referring now to Fig. 8, there is shown a flowchart for a process flow 80 for a platform movement calibration that uses images from a vision system such as system 108 shown in Fig. 10 for high precision 3D part printing. The accuracy of the movement of the robot holding the selected platform can be improved by using the vision system 108.

The flow 80 starts with step 82 where the robot holds the selected platform under the 3D printing head for a dry run of the generated robot program. Thus since the platform movement calibration of flow 80 starts after a platform is selected and the robot program is generated, flow 80 can be used in flows 50, 60 or 70 after these events have occurred.

In step 84, the vision system 108 using a 2D camera system with markers on the selected platform or use of a 3D sensor point cloud to provide images of the positions and orientation of the selected platform to the computation device 106. The computation device 106 uses the images from the vision system 108 to determine the positions and orientation of the selected platform.

The flow proceeds to decision 86 where the detected movement in the dry run of the selected platform is compared to the planned movement of that platform to check if the actual movement is within the tolerance for the planned movement. This is an accuracy check. If the answer is no, then the flow proceeds to step 87 where the robot path is adjusted based on the difference between the planned movement and the detected movement to bring the movement into tolerance. If the answer to decision 86 is yes, then at step 88 the new movement platform program is generated and the platform movement calibration process is ended. Steps 57 and 67 in flows 50 and 60 respectively can use the new movement program to have more accurate of the selected platform and thus print a high precision 3D part.

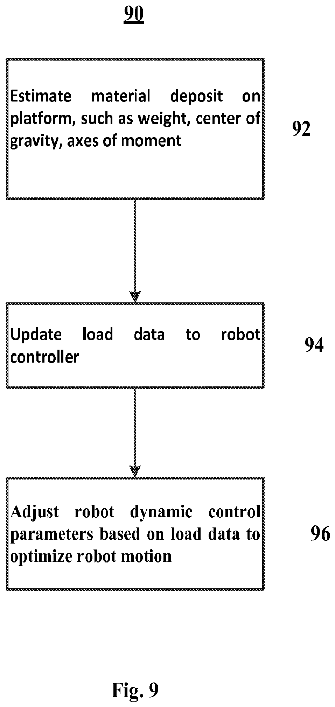

Referring now to Fig. 9, there is shown a flowchart for a process 90 that is used to improve the robot motion (speed, etc.) while the part is being built. As with flow 80, flow 90 can be used after the platform movement is generated to improve the accuracy of movement of the selected platform.
At step 92, there is an estimate of the material deposited on the selected platform such as weight, center of gravity, axes of moment. There are various methods to estimate the weight of material that is deposited on the platform. One method is based on the CAD model and the material information associated with the CAD model to calculate the weight of the material deposited on the platform. Another method is to use the signal, which controls the rate of material deposit from the 3D printing head to the platform to estimate how much material is deposited on the platform. Yet another method is to use the signal from a force sensor on the robot that holds the platform, to estimate the deposited material weight, center of gravity etc.

The flow proceeds to step 94 where the load data estimate in step 92 is updated in the robot controller 104. The estimation calculation could be in the computation device 106. However the update of load data (weight, center of gravity, axes of moment) which affects the robot real time movement accuracy needs to be done in the robot controller 104 since the robot controller 104 maintains the dynamic model of the robot. The flow then proceeds to step 96 where the robot's dynamic control parameters are adjusted based on the load data to thereby optimize the robot motion.

The robot that holds the 3D printing head can be controlled by a program (generated, simulated and validated off-line) and also can be remote controlled by an operator. This remote control by the operator is known as teleoperation. The operator can operate the 3D robotic printing system to repair the 3D parts locally and remotely without using a CAD model. The remote teleoperation system can automatically transfer the commanded 3D printing movement by the operator to the relative movement between the robot that holds the 3D printing head, and the robot that holds the platform.

It is to be understood that the description of the foregoing exemplary embodiment(s) is (are) intended to be only illustrative, rather than exhaustive, of the present invention. Those of ordinary skill will be able to make certain additions, deletions, and/or modifications to the embodiment(s) of the disclosed subject matter referred to the scope of the invention, as defined by the appended claims.

## Claims

1. A system (10, 20, 30, 40) for printing a 3D part (15, 25, 35, 45) on a platform (16, 26, 36, 46) comprising:
a first robot (12, 22, 32, 42) for holding and moving said platform (16, 26, 36, 46); and
at least one second robot (14, 24a, 34a, 44a) having attached thereto a 3D printing head (18, 28a, 38a, 48a) positioned and movable by said at least one second robot (14, 24a, 34a, 44a) to print said 3D part (15, 25, 35, 45) on said platform (16, 26, 36, 46) when said first robot (12, 22, 32, 42) moves said platform relative to said 3D printing head (18, 28a, 38a, 48a), and
a computing device (104, 106) connected to said first robot (12, 22, 32, 42) and said at least one second robot (14, 24a, 34a, 44a) for controlling moving of said first robot (12, 22, 32, 42) and said at least one second robot (14, 24a, 34a, 44a) printing of said 3D part (15, 25, 35, 45) on said platform (16, 26, 36, 46), said computing device (104, 106) being configured to:
- plan movement of said platform (16, 26, 36, 46) by said first robot (12, 22, 32, 42) and of said 3D printing head (18, 28a, 38a, 48a) by at least one second robot (14, 24a, 34a, 44a); characterised to
- select said platform (16,26,36,46) and how said robot (12, 22, 32, 42) will hold said platform (16,26,36,46);
- cause said first robot (12, 22, 32, 42) to pick up said platform (16, 26, 36, 46) when said 3D part (15, 25, 35, 45) is to be printed.

2. The system of claim 1 wherein said at least one second robot (14, 24a, 34a, 44a) comprises at least one or more other robots (24b, 34b, 44b) located adjacent to said at least one second robot (14, 24a, 34a, 44a), said one or more other robots (24b, 34b, 44b) also having attached thereto an associated one of one or more 3D printing heads (28b, 38b, 48b) positioned and movable by each of said one or more other robots (24b, 34b, 44b) to print said 3D part (15, 25, 35, 45) on said platform (16, 26, 36, 46) when said first robot (12, 22, 32, 42) moves said platform (16, 26, 36, 46) relative to said at least one second robot (14, 24a, 34a, 44a) and said associated one or more 3D printing heads (28b, 38b, 48b) attached to said one or more other robots (24b, 34b, 44b).

3. The system of claim 1 further comprising at least one or more other robots (33) located adjacent said first robot (32) for holding and inserting into a predetermined location on said 3D part (35) an associated one of one or more pre-manufactured parts ; or
further comprising at least one or more other robots (49) located adjacent said first robot (12, 42) for holding an associated one of one or more tools (47) for performing work on said 3D part (15, 45).

4. The system of claim 1 wherein said at least one second robot (14, 24a, 34a, 44a) is configured to move the 3D printing head (18, 28a, 38a, 48a) with two or three degrees of freedom with respect to the platform (16, 26, 36, 46).

5. The system of claim 1, wherein
said computing device (104, 106) having therein a 3D CAD model of said 3D part (15, 25, 35, 45) to be printed, said computing device (104, 106) having computer program code therein configured to analyze said 3D CAD model of said 3D part (15, 25, 35, 45) to be printed to plan a process for using said first robot (12, 22, 32, 42) and said at one second robot (14, 24a, 34a, 44a) to print said 3D part (15, 25, 35, 45)

6. The system of claim 5 wherein said computer program code is also configured to select said platform (16, 26, 36, 46) and to plan how said first robot (12, 22, 32, 42) holds said platform, to plan movement of said selected platform (16, 26, 36, 46) by said first robot (12, 22, 32, 42), and to generate a computer program for controlling said first robot (12, 22, 32, 42) and said second robot (14, 24a, 34a, 44a) to print said 3D part (15, 25, 35, 45) on said selected platform (16, 26, 36, 46).

7. The system of claim 6 wherein said computer program code is also configured to plan operation of said 3D printing head (18, 28a, 38a, 48a) when said 3D printing head (18, 28a, 38a, 48a) is used to print said 3D part (15, 25, 35, 45).

8. The system of claim 7 wherein said plan of operation of said 3D printing head (18, 28a, 38a, 48a) is to make a fixed deposit of material on said selected platform (16, 26, 36, 46) when said 3D part (15, 25, 35, 45) is printed; or
wherein said plan of operation of said 3D printing head (18, 28a, 38a, 48a) movement is with two or three degrees of freedom for material deposit on said selected platform (16, 26, 36, 46) when said 3D part (15, 25, 35, 45) is 3D printed.

9. The system of claim 5 wherein said computer program code is also configured to synchronize movement of said first robot (12, 22, 32, 42) and action of said 3D printing head (18, 28a, 38a, 48a) when said 3D part (15, 25, 35, 45) is being printed.

10. The system of claim 9 wherein said movement of said 3D printing head (18, 28a, 38a, 48a) when said 3D part (15, 25, 35, 45) is being printed is with two or three degrees of freedom and said computer program code is also configured to synchronize said two or three degrees of freedom of said 3D printing head (18, 28a, 38a, 48a) movement with said movement of said first robot (12, 22, 32, 42) and said action of said 3D printing head (18, 28a, 38a, 48a).

11. The system of claim 6 wherein said computer program code is also configured to determine if said first robot (12, 22, 32, 42) when holding said selected platform (16, 26, 36, 46) can reach said planned movement of said selected platform (16, 26, 36, 46).

12. The system of claim 7 wherein said computer program code is also configured to perform a dry run of said selected platform (16, 26, 36, 46) under said 3D printing head (18, 28a, 38a, 48a).

13. The system of claim 12 further comprising a vision system (108) for providing to said computation device images during said dry run of said selected platform (16, 26, 36, 46), said images representative of the position and orientation of said selected platform (16, 26, 36, 46), said computation device (104, 106) using said images to determine if said dry run positions and orientation of said selected platform (16, 26, 36, 46) during said dry run are within tolerances for said planned movement of said selected platform (16, 26, 36, 46).

14. The system of claim 7 wherein said computer program code is also configured to estimate how much material said 3D printing head (18, 28a, 38a, 48a) has deposited on said selected platform (16, 26, 36, 46) during said printing of said 3D part (15, 25, 35, 45).

## Patentansprüche

1. System (10, 20, 30, 40) zum Drucken eines 3D-Teils (15, 25, 35, 45) auf einer Plattform (16, 26, 36, 46), umfassend:
einen ersten Roboter (12, 22, 32, 42) zum Halten und Bewegen der Plattform (16, 26, 36, 46); und
mindestens einen zweiten Roboter (14, 24a, 34a, 44a), an dem ein 3D-Druckkopf (18, 28a, 38a, 48a) angebracht ist, der von dem mindestens einen zweiten Roboter (14, 24a, 34a, 44a) positioniert und bewegt werden kann, um das 3D-Teil (15, 25, 35, 45) auf der Plattform (16, 26, 36, 46) zu drucken, wenn der erste Roboter (12, 22, 32, 42) die Plattform relativ zu dem 3D-Druckkopf (18, 28a, 38a, 48a) bewegt, und eine Computervorrichtung (104, 106), die mit dem ersten Roboter (12, 22, 32, 42) und dem mindestens einen zweiten Roboter (14, 24a, 34a, 44a) verbunden ist, um das Bewegen des ersten Roboters (12, 22, 32, 42) und des mindestens einen zweiten Roboters (14, 24a, 34a, 44a) beim Drucken des 3D-Teils (15, 25, 35, 45) auf der Plattform (16, 26, 36, 46) zu steuern, wobei die Computervorrichtung (104, 106) konfiguriert ist zum:
- Planen der Bewegung der Plattform (16, 26, 36, 46) durch den ersten Roboter (12, 22, 32, 42) und des 3D-Druckkopfes (18, 28a, 38a, 48a) durch mindestens einen zweiten Roboter (14, 24a, 34a, 44a);
**gekennzeichnet durch** - Auswählen der Plattform (16, 26, 36, 46) und wie der Roboter (12, 22, 32, 42) die Plattform (16, 26, 36, 46) halten wird;
- Bewirken, dass der erste Roboter (12, 22, 32, 42) die Plattform (16, 26, 36, 46) aufnimmt, wenn das 3D-Teil (15, 25, 35, 45) gedruckt werden soll.

2. System nach Anspruch 1, wobei der mindestens eine zweite Roboter (14, 24a, 34a, 44a) mindestens einen oder mehrere andere Roboter (24b, 34b, 44b) umfasst, die sich neben dem mindestens einen zweiten Roboter (14, 24a, 34a, 44a) befinden, wobei an dem einen oder den mehreren anderen Robotern (24b, 34b, 44b) ebenfalls ein zugeordneter von einem oder mehreren 3D-Druckköpfen (28b, 38b, 48b) angebracht ist, der von jedem der einen oder mehreren anderen Roboter (24b, 34b, 44b) positioniert und bewegt werden kann, um das 3D-Teil (15, 25, 35, 45) auf der Plattform (16, 26, 36, 46) zu drucken, wenn der erste Roboter (12, 22, 32, 42) die Plattform (16, 26, 36, 46) relativ zu dem mindestens einen zweiten Roboter (14, 24a, 34a, 44a) und dem zugeordneten einen oder mehreren 3D-Druckköpfen (28b, 38b, 48b), die an dem einen oder den mehreren anderen Robotern (24b, 34b, 44b) angebracht sind, bewegt.

3. System nach Anspruch 1, ferner umfassend mindestens einen oder mehrere andere Roboter (33), die sich neben dem ersten Roboter (32) befinden, um ein zugeordnetes eines von einem oder mehreren vorgefertigten Teilen zu halten und in eine vorgegebenen Stelle auf dem 3D-Teil (35) einzufügen; oder
ferner umfassend mindestens einen oder mehrere andere Roboter (49), die sich neben dem ersten Roboter (12, 42) befinden, um ein zugeordnetes eines von einem oder mehreren Werkzeugen (47) zum Durchführen von Arbeiten an das 3D-Teil (15, 45) zu halten.

4. System nach Anspruch 1, wobei der mindestens eine zweite Roboter (14, 24a, 34a, 44a) konfiguriert ist zum Bewegen des 3D-Druckkopfs (18, 28a, 38a, 48a) mit zwei oder drei Freiheitsgraden in Bezug auf die Plattform (16, 26, 36, 46).

5. System nach Anspruch 1, wobei die Computervorrichtung (104, 106) intern über ein 3D-CAD-Modell des zu druckenden 3D-Teils (15, 25, 35, 45) verfügt, wobei die Computervorrichtung (104, 106) intern über Computerprogrammcode verfügt, der konfiguriert ist zum Analysieren des 3D-CAD-Modells des zu druckenden 3D-Teils (15, 25, 35, 45), um einen Prozess zur Verwendung des ersten Roboters (12, 22, 32, 42) und des einen zweiten Roboters (14, 24a, 34a, 44a) zu planen, um das 3D-Teil (15, 25, 35, 45) zu drucken.

6. System nach Anspruch 5, wobei der Computerprogrammcode ebenfalls konfiguriert ist zum Auswählen der Plattform (16, 26, 36, 46) und zum Planen, wie der erste Roboter (12, 22, 32, 42) die Plattform hält, zum Planen der Bewegung der ausgewählten Plattform (16, 26, 36, 46) durch den ersten Roboter (12, 22, 32, 42) und zum Erzeugen eines Computerprogramms zum Steuern des ersten Roboters (12, 22, 32, 42) und des zweiten Roboters (14, 24a, 34a, 44a), um das 3D-Teil (15, 25, 35, 45) auf der ausgewählten Plattform (16, 26, 36, 46) zu drucken.

7. System nach Anspruch 6, wobei der Computerprogrammcode ebenfalls konfiguriert ist zum Planen des Betriebs des 3D-Druckkopfs (18, 28a, 38a, 48a), wenn der 3D-Druckkopf (18, 28a, 38a, 48a) zum Drucken des 3D-Teils (15, 25, 35, 45) verwendet wird.

8. System nach Anspruch 7, wobei der Plan des Betriebs des 3D-Druckkopfs (18, 28a, 38a, 48a) darin besteht, eine feste Materialablagerung auf der ausgewählten Plattform (16, 26, 36, 46) vorzunehmen, wenn das 3D-Teil (15, 25, 35, 45) gedruckt wird; oder
wobei der Plan des Betriebs der Bewegung des 3D-Druckkopfs (18, 28a, 38a, 48a) zwei oder drei Freiheitsgrade für die Materialablagerung auf der ausgewählten Plattform (16, 26, 36, 46) aufweist, wenn das 3D-Teil (15, 25, 35, 45) 3D-gedruckt wird.

9. System nach Anspruch 5, wobei der Computerprogrammcode ebenfalls konfiguriert ist zum Synchronisieren der Bewegung des ersten Roboters (12, 22, 32, 42) und der Wirkung des 3D-Druckkopfs (18, 28a, 38a, 48a), während das 3D-Teil (15, 25, 35, 45) gedruckt wird.

10. System nach Anspruch 9, wobei die Bewegung des 3D-Druckkopfs (18, 28a, 38a, 48a) beim Drucken des 3D-Teils (15, 25, 35, 45) mit zwei oder drei Freiheitsgraden erfolgt und der Computerprogrammcode ebenfalls konfiguriert ist zum Synchronisieren der zwei oder drei Freiheitsgrade der Bewegung des 3D-Druckkopfs (18, 28a, 38a, 48a) mit der Bewegung des ersten Roboters (12, 22, 32, 42) und der Wirkung des 3D-Druckkopfs (18, 28a, 38a, 48a).

11. System nach Anspruch 6, wobei der Computerprogrammcode ebenfalls konfiguriert ist zum Ermitteln, ob der erste Roboter (12, 22, 32, 42) beim Halten der ausgewählten Plattform (16, 26, 36, 46) die geplante Bewegung der ausgewählten Plattform (16, 26, 36, 46) erreichen kann.

12. System nach Anspruch 7, wobei der Computerprogrammcode ebenfalls konfiguriert ist zum Durchführen eines Trockenlaufs der ausgewählten Plattform (16, 26, 36, 46) unter dem 3D-Druckkopf (18, 28a, 38a, 48a).

13. System nach Anspruch 12, ferner umfassend ein Bildverarbeitungssystem (108) zum Bereitstellen von Bildern an die Computervorrichtung während des Trockenlaufs der ausgewählten Plattform (16, 26, 36, 46), wobei die Bilder repräsentativ für die Position und Ausrichtung der ausgewählten Plattform (16, 26, 36, 46) sind, wobei die Computervorrichtung (104, 106) die Bilder verwendet, um zu ermitteln, ob die Trockenlaufpositionen und -ausrichtung der ausgewählten Plattform (16, 26, 36, 46) während des Trockenlaufs innerhalb der Toleranzen für die geplante Bewegung der ausgewählten Plattform (16, 26, 36, 46) liegen.

14. System nach Anspruch 7, wobei der Computerprogrammcode ebenfalls konfiguriert ist zum Abschätzen, wie viel Material der 3D-Druckkopf (18, 28a, 38a, 48a) während des Druckens des 3D-Teils (15, 25, 35, 45) auf der ausgewählten Plattform (16, 26, 36, 46) abgelagert hat.

## Revendications

1. Système (10, 20, 30, 40) permettant d'imprimer une pièce 3D (15, 25, 35, 45) sur une plateforme (16, 26, 36, 46) comprenant :
un premier robot (12, 22, 32, 42) destiné à maintenir et à déplacer ladite plateforme (16, 26, 36, 46) ; et
au moins un second robot (14, 24a, 34a, 44a) auquel est fixée une tête d'impression 3D (18, 28a, 38a, 48a) positionnée et pouvant être déplacée par ledit au moins un second robot (14, 24a, 34a, 44a) pour imprimer ladite pièce 3D (15, 25, 35, 45) sur ladite plateforme (16, 26, 36, 46) lorsque ledit premier robot (12, 22, 32, 42) déplace ladite plateforme par rapport à ladite tête d'impression 3D (18, 28a, 38a, 48a) et un dispositif informatique (104, 106) connecté audit premier robot (12, 22, 32, 42) et audit au moins un second robot (14, 24a, 34a, 44a) pour contrôler le déplacement dudit premier robot (12, 22, 32, 42) et ledit au moins un second robot (14, 24a, 34a, 44a) imprimant ladite pièce 3D (15, 25, 35, 45) sur ladite plateforme (16, 26, 36, 46), ledit dispositif informatique (104, 106) étant configuré pour :
- planifier le mouvement de ladite plateforme (16, 26, 36, 46) par ledit premier robot (12, 22, 32, 42) et de ladite tête d'impression 3D (18, 28a, 38a, 48a) par au moins un second robot (14, 24a, 34a, 44a) ;
caractérisé pour
- sélectionner la plateforme (16,26,36,46) et la façon dont ledit robot (12, 22, 32, 42) maintiendra ladite plateforme (16,26,36,46) ;
- amener ledit premier robot (12, 22, 32, 42) à prendre ladite plateforme (16, 26, 36, 46) lorsque ladite pièce 3D (15, 25, 35, 45) doit être imprimée.

2. Système selon la revendication 1, dans lequel ledit au moins un second robot (14, 24a, 34a, 44a) comprend au moins un ou plusieurs autres robots (24b, 34b, 44b) situés à côté dudit au moins un second robot (14, 24a, 34a, 44a), lesdits un ou plusieurs autres robots (24b, 34b, 44b) possédant une ou plusieurs têtes d'impression 3D associées (28b, 38b, 48b) également fixées à ceux-ci, l'une des têtes d'impression 3D associées étant positionnée et pouvant être déplacée par chacun desdits un ou plusieurs autres des robots (24b, 34b, 44b) pour imprimer ladite pièce 3D (15, 25, 35, 45) sur ladite plateforme (16, 26, 36, 46) lorsque ledit premier robot (12, 22, 32, 42) déplace ladite plateforme (16, 26, 36, 46) par rapport audit au moins un second robot (14, 24a, 34a, 44a) et auxdites une ou plusieurs têtes d'impression 3D associées (28b, 38b, 48b) fixées auxdits un ou plusieurs autres robots (24b, 34b, 44b).

3. Système selon la revendication 1, comprenant en outre au moins un ou plusieurs autres robots (33) situés de façon adjacente audit premier robot (32) destinés à maintenir et insérer dans un emplacement prédéfini sur ladite pièce 3D (35) une pièce associée d'une ou de plusieurs pièces préfabriquées ; ou
comprenant en outre au moins un ou plusieurs autres robots (49) situés de façon adjacente audit premier robot (12, 42) destinés à maintenir un outil associé d'un ou de plusieurs outils (47) destiné à effectuer un travail sur ladite pièce 3D (15, 45).

4. Système selon la revendication 1, dans lequel ledit au moins un second robot (14, 24a, 34a, 44a) est configuré pour déplacer la tête d'impression 3D (18, 28a, 38a, 48a) avec deux ou trois degrés de liberté par rapport à la plateforme (16, 26, 36, 46).

5. Système selon la revendication 1, dans lequel ledit dispositif informatique (104, 106) possédant en son sein un modèle 3D CAD de ladite pièce 3D (15, 25, 35, 45) à imprimer, ledit dispositif informatique (104, 106) possédant en son sein un code de programme informatique configuré pour analyser ledit modèle 3D CAD de ladite pièce 3D (15, 25, 35, 45) à imprimer pour planifier un processus d'utilisation dudit premier robot (12, 22, 32, 42) et dudit second robot (14, 24a, 34a, 44a) afin d'imprimer ladite pièce 3D (15, 25, 35, 45)

6. Système selon la revendication 5, dans lequel ledit code de programme informatique est également configuré pour sélectionner ladite plateforme (16, 26, 36, 46) et pour planifier la façon dont ledit premier robot (12, 22, 32, 42) maintient ladite plateforme, pour planifier le mouvement de ladite plateforme sélectionnée (16, 26, 36, 46) par ledit premier robot (12, 22, 32, 42), et pour générer un programme informatique destiné à contrôler ledit premier robot (12, 22, 32, 42) et ledit second robot (14, 24a, 34a, 44a) afin d'imprimer ladite pièce 3D (15, 25, 35, 45) sur ladite plateforme sélectionnée (16, 26, 36, 46).

7. Système selon la revendication 6, dans lequel ledit code de programme informatique est également configuré pour planifier le fonctionnement de ladite tête d'impression 3D (18, 28a, 38a, 48a) lorsque ladite tête d'impression 3D (18, 28a, 38a, 48a) est utilisée pour imprimer ladite pièce 3D (15, 25, 35, 45).

8. Système selon la revendication 7, dans lequel ledit plan de fonctionnement de ladite tête d'impression 3D (18, 28a, 38a, 48a) consiste à effectuer un dépôt fixe de matériau sur ladite plateforme sélectionnée (16, 26, 36, 46) lorsque ladite pièce 3D (15, 25, 35, 45) est imprimée ; ou
dans lequel ledit plan de fonctionnement de ladite tête d'impression 3D (18, 28a, 38a, 48a) se déplace avec deux ou trois degrés de liberté pour le dépôt de matière sur ladite plateforme sélectionnée (16, 26, 36, 46) lorsque ladite pièce 3D (15, 25, 35, 45) est imprimée en 3D.

9. Système selon la revendication 5, dans lequel ledit code de programme informatique est également configuré pour synchroniser le mouvement dudit premier robot (12, 22, 32, 42) et l'action de ladite tête d'impression 3D (18, 28a, 38a, 48a) lorsque ladite pièce 3D (15, 25, 35, 45) est en cours d'impression.

10. Système selon la revendication 9, dans lequel ledit mouvement de ladite tête d'impression 3D (18, 28a, 38a, 48a) lorsque ladite pièce 3D (15, 25, 35, 45) est imprimée est effectué avec deux ou trois degrés de liberté et ledit code de programme informatique est également configuré pour synchroniser lesdits deux ou trois degrés de liberté dudit mouvement de la tête d'impression 3D (18, 28a, 38a, 48a) avec ledit mouvement dudit premier robot (12, 22, 32, 42) et ladite action de ladite tête d'impression 3D (18, 28a, 38a, 48a).

11. Système selon la revendication 6, dans lequel ledit code de programme informatique est également configuré pour déterminer si ledit premier robot (12, 22, 32, 42), lorsqu'il maintient ladite plateforme sélectionnée (16, 26, 36, 46), peut atteindre ledit mouvement planifié de ladite plateforme sélectionnée (16, 26, 36, 46).

12. Système selon la revendication 7, dans lequel ledit code de programme informatique est également configuré pour permettre un fonctionnement à sec de ladite plateforme sélectionnée (16, 26, 36, 46) sous ladite tête d'impression 3D (18, 28a, 38a, 48a).

13. Système selon la revendication 12, comprenant en outre un système de vision (108) destiné à fournir audit dispositif de calcul des images pendant ledit fonctionnement à sec de ladite plateforme sélectionnée (16, 26, 36,46), lesdites images représentant la position et l'orientation de ladite plateforme sélectionnée (16, 26, 36, 46), ledit dispositif de calcul (104, 106) utilisant lesdites images pour déterminer si lesdites positions de fonctionnement à sec et l'orientation de ladite plateforme sélectionnée (16, 26, 36, 46) pendant ledit fonctionnement à sec se trouvent dans les tolérances pour ledit mouvement planifié de ladite plateforme sélectionnée (16, 26, 36, 46).

14. Système selon la revendication 7, dans lequel ledit code de programme informatique est également configuré pour estimer la quantité de matière que ladite tête d'impression 3D (18, 28a, 38a, 48a) a déposée sur ladite plateforme sélectionnée (16, 26, 36, 46) pendant ladite impression de ladite pièce 3D (15, 25, 35, 45).
